# EUROPEAN PATENT SPECIFICATION

(11) **EP 3 536 864 B1**
(45) Date of publication and mention of the grant of the patent: **30.12.2020**
(21) Application number: 18160925.6
(22) Date of filing: 09.03.2018
(51) Int. Cl.: E02F 9/20, E02F 9/22

(54) **HYDRAULIC SYSTEM AND METHOD OF CONTROLLING HYDRAULIC ACTUATOR**
HYDRAULIKSYSTEM UND VERFAHREN ZUR STEUERUNG EINES HYDRAULISCHEN AKTUATORS
SYSTÈME HYDRAULIQUE ET PROCÉDÉ DE COMMANDE D'UN ACTIONNEUR HYDRAULIQUE

(43) Date of publication of application: 11.09.2019
(73) Proprietor: Sandvik Mining and Construction Oy, 33330 Tampere (FI)
(72) Inventor: VERHO, Samuli, 33330 Tampere (FI)
(74) Representative: Sandvik

(56) References cited:
- EP-A1- 1 288 505
- EP-A1- 2 653 621
- WO-A1-2011/133849
- WO-A2-2006/060638

## Description

### Background of the invention

The invention relates to a hydraulic system configured to generate hydraulic power for a hydraulic actuator of a mobile work machine, and to control operation of the actuator.

The invention further relates to a mobile mining machine and method of controlling hydraulic actuator.

The field of the invention is defined more specifically in the preambles of the independent claims.

In mines and at other work sites different type of mobile work machines are used. The mobile work machines are provided with one or more working devices for executing designed work tasks at the work site. The mobile work machine may be a wheel loader, a transport vehicle or dumper, a rock drilling rig, an excavator or a lifting machine, for example. The machines are typically provided with hydraulic systems because hydraulics has several advantages, such as great power density and possibility to flexible power transfer. Further, hydraulic cylinders are great actuators for generating linear forces and movements. However, the present hydraulic systems contain some disadvantages regarding efficiency. A device and method according to the prior art is disclosed in WO 2011/133849 A1.

### Brief description of the invention

An object of the invention is to provide a novel and improved hydraulic system and a mobile mining machine equipped with such hydraulic system. The invention further relates to a novel and improved method of controlling hydraulic actuators.

The hydraulic system according to the invention is characterized by the characterizing features of a first independent apparatus claim.

The mobile mining machine according to the invention is characterized by the characterizing features apparatus claim 10.

The method according to the invention is characterized by the charactering features and steps of an independent method claim.

An idea of the disclosed solution is that the hydraulic system is intended for a mobile work machine and it comprises two hydraulic pumps, a first hydraulic pump and a second hydraulic pump for generating hydraulic fluid flow and pressure to a hydraulic circuit in order to actuate a hydraulic actuator of the mobile machine. One common electric motor is configured to rotate the mentioned two hydraulic pumps simultaneously. The first hydraulic pump is connected to a first working pressure space or volume of the hydraulic actuator by means of a first hydraulic line and the second hydraulic pump is connected to a second working pressure space of the hydraulic actuator by means of a second hydraulic line. Pressure of the hydraulic fluid prevailing in the first working pressure space or volume and the second pressure space or volume are configured to cause inversely directed forces for a moving element of the actuator, such as a piston of a hydraulic cylinder. Further, the first and second hydraulic pumps have inverse pumping characteristics so that when the first hydraulic pump generates pressure, the second hydraulic pump generates suction, and vice versa. In the disclosed solution movement speed and direction of the hydraulic actuator are controlled by controlling rotational speed and direction of the mentioned common electric motor. The controlling of the motor may be executed in various ways depending on type of the motor, for example.

The mentioned inverse pumping characteristics has the following meaning: The first hydraulic pump is configured to generate hydraulic pressure to the first hydraulic line when the electric motor is rotated in a first direction of rotation and correspondingly the second hydraulic pump is configured to generate suction to the second hydraulic line. And correspondingly, the first hydraulic pump is configured to generate suction to the first hydraulic line when the electric motor is rotated in a second direction of rotation and correspondingly the second hydraulic pump is configured to generate hydraulic pressure to the second hydraulic line. In other words, when one pump is pumping the other pump executes sucking action, and vice versa.

In the disclosed solution, the hydraulic actuator is controlled indirectly by means of the common electric motor. The speed and direction controlled electric motor serves as the controlling element for controlling operation of the actuator. Then, the entire hydraulic circuit may serve only as a kind of a power transmission system or a slave system without actively controlling the operation of the hydraulic actuator. In other words, the motor may be the only device that directly is controlled by means of control commands.

Further, it can be considered that the disclosed solution is a kind of a double pump - single motor -control system. The pumps, connected on opposite sides of a moving element of the actuator, are controlled simultaneously by the speed and direction controlled electric motor whereby the system may be without any separate flow and pressure adjusting elements arranged to pressure fluid channels.

An advantage of the disclosed solution is that advantages of the hydraulics may be exploited without the disadvantages. The disclosed solution is simple and robust since it requires no hydraulic control elements for controlling the operation of the actuator. If any valves are included in the system, they may be passive valves or they may be simple ON/OFF type valves, which do not need complicated and accurate control. Control instructions and commands may be directed directly to the speed and direction controlled electric motor, since the system may be without any control valves requiring active control. Thanks to this, there is no need to arrange vulnerable electric control cables and similar control transmitting paths to harsh locations, but instead, only the electric motor needs to be controlled. Further, the operation of the disclosed solution is energy efficient since there is no need for different adjusting hydraulic elements arranged in hydraulic lines, which elements typically cause throttling and energy losses. The disclosed solution makes it possible to design even a totally valveless speed and direction control system for a hydraulic actuator connected the hydraulic system. All in all, the disclosed solution utilized best features of the hydraulics and at the same time diminishes its typical disadvantages.

According to an embodiment, the disclosed hydraulic system comprises one single hydraulic actuator. Then the entire hydraulic system is dedicated to operate with only one hydraulic actuator. An advantage is that the system may be simple in structure and it may be tailored for the specific requirements of the actuator.

According to an embodiment, the disclosed hydraulic system, which utilizes the above disclosed control principle, may be configured to actuate two or more actuators at separate times. Then the hydraulic system comprises two or more alternative hydraulic actuators, which may be selectively connected to the disclosed hydraulic system one at a time. The system may comprise at least one distribution device for selecting which actuator is energized by the disclosed hydraulic system. The distribution device may implement ON/OFF principle whereby it may have simple design and control. Further, flow control elements and channels of the distribution device are dimensioned so wide that throttling and power losses are minimized. The distribution device may comprise a valve block which is designed only to direct the flow paths to the selected actuators and not to adjust flow or pressure of the directed flow paths in any way. As an alternative, one single valve block may be substituted with separate ON/OFF -valves with relatively large diameters.

According to an embodiment, the disclosed hydraulic system with one electric motor and double pump arrangement is configured to operate a primary hydraulic actuator, such as a lifting cylinder, steering cylinder or turning motor, which is configured to move an object or joint, and the system is further configured to operate a hydraulic locking device, such as a locking cylinder, which is configured lock and release movement of the object or joint influenced by the primary hydraulic actuator. The primary hydraulic actuator and the hydraulic locking device are operationally connected whereby they both may be driven in accordance with the disclosed operating principle. In this special embodiment the hydraulic system comprises hydraulic actuators which are driven parallel and which differ from each other.

According to an embodiment, the hydraulic system provided with one electric motor and double pump arrangement comprises several similar actuators operating parallel. The system may, for example, comprise two steering cylinders of a frame steered mobile work machine, two dump cylinders operating in tandem and designed for emptying a dump box of a hauling truck, two tandem operating lifting cylinders of a wheel loader or two lifting cylinders of a crane arranged to operate in tandem and configured to lift a boom.

According to an embodiment, the system may comprise two hydraulic actuators operating in tandem. Then the desired operation may be ensured by using duplicated actuator setting. Two hydraulic cylinders may operate simultaneously in the same direction of movement, or alternatively in opposite directions of movements, but still both cylinders having the same operational purpose and affecting to the same joint or object.

According to an embodiment, the common electric motor of the hydraulic system is an AC motor. Then the rotation speed and direction of the motor may be controlled by means of a variable-frequency drive (VFD) whereby the hydraulic actuator is controlled indirectly by means of the VFD controlled AC motor. In practice, the AC motor may be controlled by means of a frequency converter. In other words, the motor may have an inverter drive. In general, the VFD is a type of adjustable-speed drive used in electromechanical drive systems to control AC motor speed and torque by varying motor input frequency and voltage. Let it be mentioned that other suitable means utilizing power electronics technology and allowing variable speed drive may also be used for achieving the same purpose.

According to an embodiment, the electric motor powering the double pump set is a DC motor, which is an alternative to the previous embodiment utilizing the AC motor. Since speed of the DC motor is directly proportional to armature voltage and inversely proportional to motor flux (which is a function of field current), either armature voltage or field current control may be used to control the speed. Thus, the DC motor may be provided with a DC drive or corresponding DC motor speed control system enabled by the modern power electronics.

According to an embodiment, movement speed and direction of the hydraulic actuator are configured to be proportional to rotation speed and direction of the common electric motor. The pumps are configured to generate for the actuator, which are controlled by the motor, only the needed fluid flow rate which corresponds to the desired movement speed of the controlled actuator. In practice the operator gives a control command defining direction and speed of movement of the controlled actuator, and a control unit generates a speed request for a drive unit of the common electric motor. Since the movement speed and direction of the actuator are proportional to the rotation speed and direction of the common electric motor, controlling of the system is logical and easy to execute. The control unit may be provided with a processor and software for generating the control commands for the drive unit.

According to an embodiment, the first and second hydraulic pump are connected to a same rotating axle rotated by the common electric motor. In other words, the pumps may have direct mechanical drive. This way, mechanical structure of the rotating arrangement may be very simple, durable, maintenance free, inexpensive and it requires only little space.

According to an embodiment, the first and second hydraulic pump both have physical mechanical connection to the common electric motor. The mechanical connection may be the above disclosed common rotating axle, but at least in some cases there may be other mechanical arrangements for transmitting the rotation from the common motor to the pumps. For example, there may be a gear box or corresponding force transmitting device for connecting the common motor and the two pumps. This embodiment allows variations for positioning the motor and pumps on the carrier of the mobile work machine, whereby layout of the machine is more flexible.

According to an embodiment, the first hydraulic pump has a first nominal rotation direction and the second hydraulic pump has a second nominal rotation direction. The mentioned first and second nominal directions are in opposite direction relative to each other. In other words, the pumps have inverse pressure effect.

According to an embodiment, nominal size of the first working pressure space of the hydraulic actuator is greater than nominal size of the second working pressure space. Then the first hydraulic pump may have a first volume flow rate per revolution and the second hydraulic pump may have a second volume flow rate per revolution. The second volume flow rate may be minor than the first volume flow rate per revolution. Let it be mentioned that the term "volume flow rate per revolution" is also widely known as "displacement volume per revolution", and also in an even simpler format "displacement per revolution". In this embodiment the pumps may be dimensioned according to the controlled actuator when the actuator has different volumes on opposite sides of a movable element of the actuator. This is the case in a hydraulic cylinder, wherein volume on a piston rod side is smaller than on the opposite side. However, in a hydraulic motor the volumes of the pressure spaces are typically equal in size.

According to an embodiment, the first and second volume flow rates per revolution are dimensioned proportional to relative nominal sizes of the first and second working pressure space, whereby the capacities of the hydraulic pumps match with the nominal size of the dedicated working pressure spaces.

According to an embodiment, the hydraulic actuator is a hydraulic cylinder wherein the first working pressure space with greater nominal size is located on a piston side of the cylinder, and the second working pressure space with minor nominal size is located on a piston rod side of the cylinder.

According to an embodiment, the hydraulic actuator is a hydraulic motor and nominal sizes of the first and second working pressure spaces are the same. Then volume flow rates per revolution of the pumps may have same magnitude.

According to an embodiment, the hydraulic circuit is an open circuit system, wherein feed ports of the first and second pump are connected to a reservoir or hydraulic fluid tank. In a closed loop circuit the feed ports of the pumps are connected to receive returning hydraulic fluid directly from the actuator. In the closed loop circuit a charge pump is needed in the loop for maintaining the pressure. Advantages of the open circuit system compared to the closed loop circuit are that the charge pump may be omitted and that simpler commercially available hydraulic components may be used in the system. Thus, the system may be inexpensive and durable.

According to an embodiment, the hydraulic fluid of the first and second working pressure spaces of the hydraulic actuator are configured to be discharged through the dedicated first and second hydraulic pump to a reservoir.

According to an embodiment, the hydraulic system is provided with an energy recovery feature. The system is configured to convert kinetic energy at first into hydraulic energy, and is secondly configured to convert the hydraulic energy into kinetic rotational energy, and further, is finally configured to convert the kinetic rotational energy into electric energy. In the disclosed system, at least one of the mentioned hydraulic pumps is configured to serve as a hydraulic motor when discharged hydraulic fluid flow is flowing through the pump to the reservoir, whereby rotation of the hydraulic pump is generated. Then the hydraulic pump is configured to rotate the common electric motor which is configured to serve as a generator when being de-energized. The rotation of the common electric motor is configured to generate the electric energy. The disclosed energy recovery feature is advantageous for electrically operable mobile work machines especially when they are not connected to an external electric power supply or network. Thereby, the embodiment is well suited for battery operated work machines. Further, the energy recover feature does not require any special components but the feature may be implemented using the basic components of the system. A further advantage is that the recovered energy is transformed into electric energy which is relatively easy to store, or alternatively to direct it for other electrically operated devices.

According to an embodiment, the hydraulic circuit of the hydraulic system is without any energy storage. Thus, the hydraulic system is without any hydraulic energy storage, such as pressure accumulators. Because there is no hydraulic storage elements in the system, the system may be simple in structure and it requires less space and maintenance.

According to an embodiment, the system comprises one or more energy storages for storing the generated electrical energy. The mentioned electric energy storages are the only energy storages of the hydraulic system. The mobile work machine may comprise a battery package or corresponding electric storage device.

According to an embodiment, the system does not comprise either hydraulic or electric energy storages for storing the recovered energy. Rather, the recovered electric is led away from the system and is utilized immediately for other purposes, such as for driving other electric motors or devices of the mobile work machine.

According to an embodiment, the hydraulic system is configured to recover potential energy and to convert it into electricity when lowering mass. The potential energy recovery may take place when lowering a boom, bucket or dump box, for example.

According to an embodiment, the hydraulic system is configured to recover kinetic energy and to convert it into electricity when stopping of movement of load or mass. The kinetic energy recovery may take place when braking the mobile work machine or its movable components and parts.

According to an embodiment, the first and second hydraulic lines of the hydraulic system are both without any actively controlled valves. This way, the hydraulic system may be simple and power losses caused by the valves may be avoided.

According to an embodiment, the first and second hydraulic lines of the hydraulic system are both without any fluid control elements, such as valves. As it is disclosed already above, operational speed of the actuators are adjusted by the speed controlled electric motor of the hydraulic system.

According to an embodiment, the first and second hydraulic lines of the hydraulic system are both without any directional valves configured to control movement direction of the hydraulic actuator. As it is disclosed already above, operational speed of the actuators are adjusted by the speed controlled electric motor of the hydraulic system.

According to an embodiment, the first hydraulic line comprises a first load holding valve for preventing discharge of hydraulic fluid from the actuator when the hydraulic system is non-pressurized, and correspondingly, the second hydraulic line comprises a second load holding valve for preventing discharge of hydraulic fluid from the actuator. Thanks to the load holding valves the actuator is configured to hold its position when no hydraulic power is generated by means of the first and second hydraulic pumps. In other words, the load holding valves close the hydraulic lines when the hydraulic system is non-pressurized, whereby the actuator is stopped and locked hydraulically to be in immovable state. The load holding valves operate automatically and independently without any external control.

According to an embodiment, the hydraulic lines may only comprise passive valves, which are not controlled by any control command or signal external to the valve.

According to an embodiment, the hydraulic lines may comprise passive check valves serving as anti-cavitation valves. The check valves operate independently and automatically without any external control.

According to an embodiment, the system may be provided with at least one pressure setting device connected to at least one pressure line. However, the purpose of such device is to protect the hydraulic system and not to control operation of the connected actuator. The pressure setting device is meant for special situations and needs.

According to an embodiment, the above mentioned mobile work machine is a mobile mining machine. The mining machine comprises a movable carrier and one or more mine work devices for executing mining work at an underground or surface mine work site. The mining machine comprises a hydraulic system for moving the mine work device and the hydraulic system is in accordance with the previously disclosed embodiments. The mining machine may be a rock drilling rig, a hauling truck, a wheel loader, a bolting rig, a shotcrete vehicle or a charging vehicle.

According to an embodiment, the mining machine is a rock drilling rig comprising at least one drilling boom provided with a drilling unit. The drilling boom comprises at least one hydraulic boom cylinder for moving the drilling boom. Movement speed and direction of the mentioned boom cylinder connected to the dedicated hydraulic system is configured to be controlled by means of the speed controlled electric motor.

According to an embodiment, the mining machine is a frame steered machine such as a wheel loader, hauling truck or rock drilling rig comprising two frame parts and a steering joint between the frame parts. The frame parts are turned during steering relative to each other by means of at least one hydraulic steering cylinder connected to the dedicated hydraulic system. Further, movement speed and direction of the at least one steering cylinder is configured to be controlled by means of the speed controlled electric motor. The machine may comprise a doubled steering actuator system comprising two steering cylinders operating parallel or in opposite directions. Cylinders are accurate and powerful hydraulic actuators which can be easily controlled by means of the disclosed system.

According to an embodiment, the mining machine is a wheel loader comprising a bucket which is connected to the carrier by means of at least one lifting arm. The lifting arm is movable relative to the carrier by means of at least one hydraulic lifting cylinder connected to the dedicated hydraulic system. Further, movement speed and direction of the at least one lifting cylinder is configured to be controlled by means of the speed controlled electric motor. The system may comprise one single lifting cylinder or two cylinders may operate in tandem.

According to an embodiment, the mining machine is a wheel loader comprising a bucket which is connected to the carrier by means of at least one lifting arm. The lifting arm is movable relative to the carrier by means of at least one hydraulic lifting cylinder connected to the dedicated hydraulic system. Further, the bucket may be tilted relative to a distal end of the lifting arm, i.e. the bucket may be turned by means of one or more hydraulic tilting cylinders relative to the lifting arm. Movement speed and direction of the at least one tilting cylinder is configured to be controlled by means of the speed controlled electric motor. The system may comprise one single tilting cylinder or two cylinders may operate in tandem.

According to an embodiment, the mining machine is a frame steered wheel loader comprising one or more steering cylinders, and a bucket which is connected to the carrier by means of at least one lifting arm. The machine further comprises one or more lifting cylinders and one or more tilting cylinders for moving the bucket. The mentioned steering cylinders, lifting cylinders and tilting cylinders may be controlled in accordance with the solution disclosed in this patent application.

According to an embodiment, the mining machine is a hauling truck comprising a dump box for receiving rock material. The dump box is movable relative to the carrier by means of at least one hydraulic dump cylinder connected to the dedicated hydraulic system. Further, movement speed and direction of the at least one dump cylinder is configured to be controlled by means of the speed controlled electric motor. The system may comprise one single dump cylinder or two cylinders may operate in tandem.

According to an embodiment, control features of speed controlled motor may be software controlled, whereby the control features may be adjusted by a software program and input parameters. The motor may be controlled by means of a control unit comprising a processor for executing the software program. This way the control principles of the motor and the directly affected actuator may be easily changed by adjusting the input parameters or by reprogramming the software, or both.

According to an embodiment, the mobile work machine is a forest machine such as a harvester, forwarder or other forest tractor. The forest machines are typically frame steered vehicles and may thereby comprise steering cylinders. The forest machines may also comprise booms which may be lifted and turned by means of hydraulic cylinders or motors. Alternatively, the mobile work machine may be an excavator or earth moving machine comprising a hydraulic rotating motor for turning its upper frame relative to a lower frame provided with wheels or crawler tracks. The excavators also comprises a boom, which may be lifted by means of a cylinder. Further, the mobile work machine may be a pile driving rig, a mobile crane or a person lifter which all may comprise one or more lifting cylinders which may be connected to the disclosed hydraulic system with one motor - two pumps -arrangement.

The above disclosed embodiments may be combined in order to form suitable solutions having those of the above features that are needed.

### Brief description of the figures

Some embodiments are described in more detail in the accompanying drawings, in which
Figure 1 is a schematic side view of a frame steered rock drilling rig for underground drilling and being provided with a movable drilling boom,
Figure 2 is a schematic side view of a frame steered wheel loader for mine use and being equipped with a movable bucket,
Figure 3 is a schematic side view of a frame steered hauling truck provided with a movable dump box,
Figure 4 is a schematic diagram of a hydraulic circuit configured to generate power for a hydraulic actuator operation of which is controlled by an electric motor powering a double pump system,
Figure 5 is a schematic diagram of a hydraulic circuit configured to drive a hydraulic cylinder,
Figure 6 is a schematic diagram of a more complete hydraulic circuit in a de-pressurized state,
Figure 7 is a schematic diagram of a hydraulic circuit configured to operate several hydraulic actuators one at a time, and using the disclosed one motor - two pumps control principle,
Figure 8 is a schematic diagram of a hydraulic circuit comprising two hydraulic cylinders operating in parallel manner,
Figure 9 is a schematic diagram of another hydraulic circuit comprising two hydraulic cylinders operating simultaneously but in opposite directions,
Figure 10 is a schematic side view of a mobile work machine comprising a rotatable upper frame, and
Figure 11 is a schematic side view of a boom lifting and locking means.

For the sake of clarity, the figures show some embodiments of the disclosed solution in a simplified manner. In the figures, like reference numerals identify like elements.

### Detailed description of some embodiments

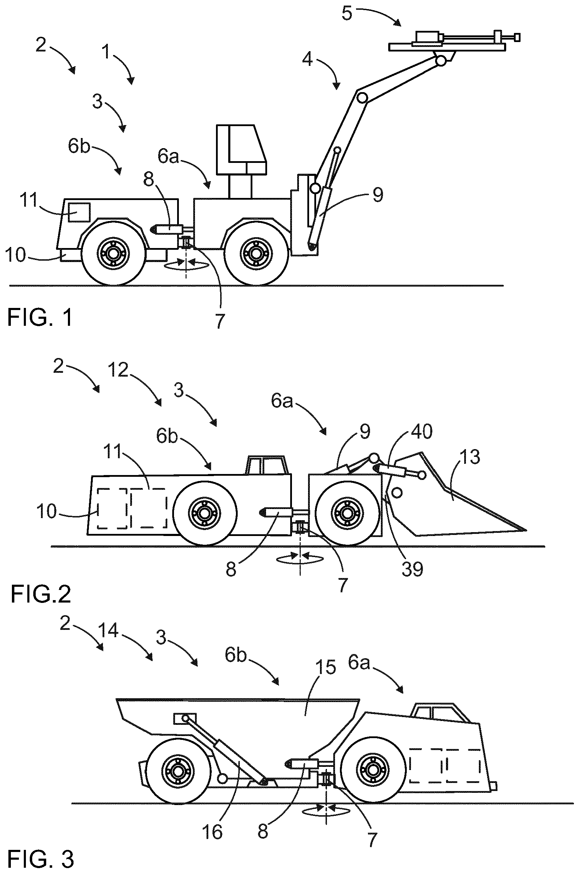

Figure 1 shows a rock drilling rig 1 as a first example of a mobile mining machine 2 comprising a carrier 3 and a drilling boom 4 provided with a rock drilling unit 5. The machine 2 may be frame steered whereby it comprises a front frame part 6a and a rear frame part 6b, and a turning joint 7 between them. The frame parts 6a, 6b may be turned relative to each other by means of one or two hydraulic steering actuators 8. The boom 4 may be moved by means of a one or more lifting cylinders 9. The machine 2 may also comprise other hydraulic actuators, of course. Also rock bolting rigs, charging rigs and measuring vehicles may comprise a substantially similar basic carrier and boom structures. Further, the machine 2 may be an electrically operated device and it may comprise a battery 10 or corresponding electric power storage.

The machine 2 comprises at least one hydraulic system 11 or circuit for generating hydraulic power for the hydraulic actuators. For clarity reasons the hydraulic system 11 is shown in a simplified manner. The machine 2 may comprise one or more improved hydraulic systems disclosed in this patent application for powering and controlling dedicated hydraulic actuators, such as the steering cylinders 7 and the lifting cylinders 9. The above disclosed solutions and embodiments may be applied in all type of rigs being implemented in mine operations. The same applies both surface and underground machines.

Figure 2 discloses a wheel loader 12 provided with a bucket 13 which is movable by means of a lifting cylinder 9. The bucket 13 may be tilted relative to an outer end portion a lifting arm 39 by means of a tilting cylinder 40. The loader 12 may also be frame steered and may comprise a steering cylinder 7 for turning the frame parts 6a, 6b.

Figure 3 discloses a hauling truck 14 comprising a dump box 15 for receiving rock material. The dump box 15 is movable relative to a carrier 3 by means of one or two hydraulic dump cylinders 16.

Figures 2 and 3 disclose mining machines 2 which may comprise dedicated hydraulic systems for powering and controlling their steering cylinders 7, lifting cylinders 9 and dump cylinders 16.

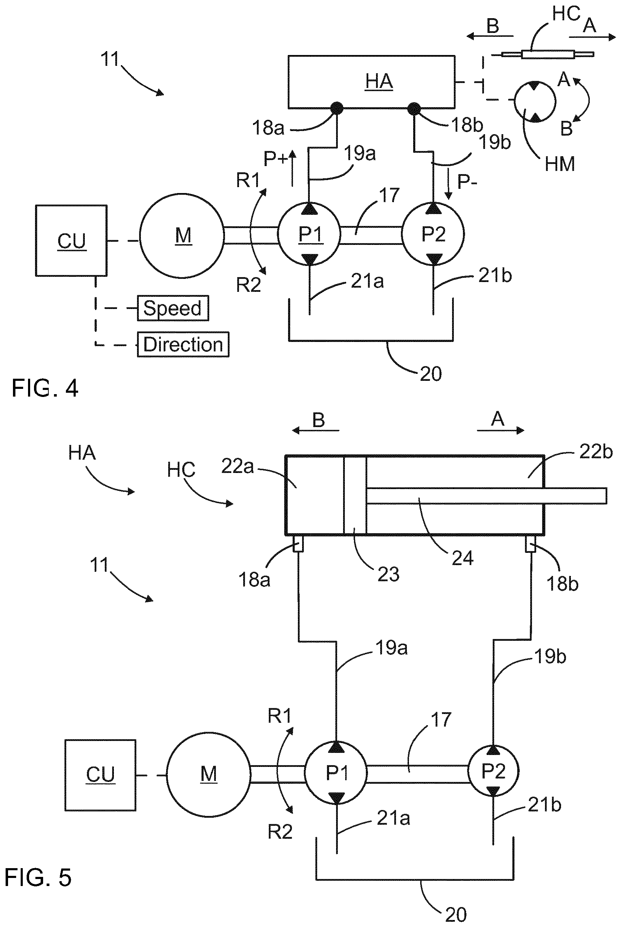

Figure 4 discloses a hydraulic system 11 comprising two hydraulic pumps P1 and P2 driven by a common electric motor M. A control device or unit CU may control rotation speed and direction of the motor M. The motor M may be connected to the pumps P1, P2 by means of a rotating axle 17, whereby both pumps P1 and P2 are rotated simultaneously. In this case the pumps P1 and P2 may have the same capacity since pressure spaces of a hydraulic actuator HA may have similar size on both sides of a moving element of the actuator. The hydraulic actuator HA may be a hydraulic cylinder HC or a hydraulic motor HM, both having movement directions A and B. In the cylinder the moving member or element may be a piston and in the motor it may be rotating separation element, gear or wheel. The hydraulic actuator HA has pressure ports 18a, 18b which are connected by means of fluid lines 19a, 19b to the pumps P1, P2. The pumps P1, P2 are in fluid connection to a reservoir 20 through fluid lines 21a, 21b.

As can be noted, operation of the hydraulic actuator HA is controlled by controlling the motor since there is no control valves in the fluid lines 19a, 19b. When the motor M receives speed and direction request from the control unit CU, it begins to rotate in direction R1 whereby the first pump P1 generated pressure P+ to the pressure port 18b of the hydraulic actuator HA. Then the moving member of the hydraulic actuator initiates its movement in the direction A and hydraulic fluid is discharged from the actuator HA through the pressure port 18b. Simultaneously the second pump P2 is rotated by the motor M and the pump P2 causes suction P- to the pressure line 19b. When the actuator HA is moved in the opposite direction, then direction of the motor M is changed and rotational speed of the motor M is adjusted in accordance with the desired movement speed of the actuator HA. This way, movement control of the actuator HA is controlled indirectly by the electric motor M without a need for any directional control valves.

Figure 5 discloses a hydraulic circuit 11, which corresponds to the one shown in previous Figure 4. However, in this case the hydraulic actuator HA is a hydraulic cylinder HC having pressure spaces 22a, 22b separated by a piston 23. Pressures space 22b has smaller cross sectional area because of a piston rod 24, whereby volume of the space 22b is smaller than volume of the space 22a. Therefore the second pump P2 connected to the second space 22b may have smaller displacement capacity compared to the first pump P1. Basic structures and operational principles are the same in the solutions of Figure 4 and Figure 5.

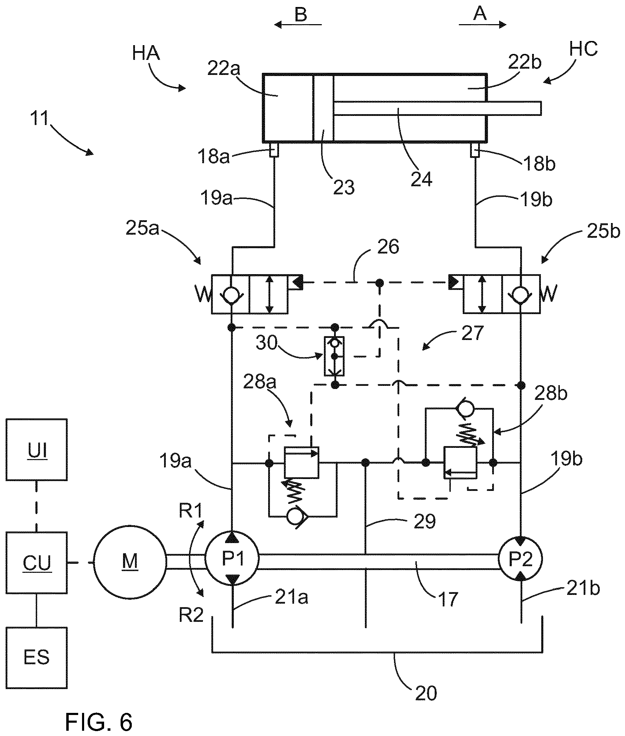

Figure 6 discloses a hydraulic circuit 11, which differs from the previously presented circuit of Figure 5 in that the circuit 11 is now provided with two load holding valves 25a, 25b arranged in the pressure lines 19a, 19b. When the circuit 11 is in non-pressurized state, spring loaded load holding valves 25a, 25b are closed as it is disclosed in Figure 6. When the system is activated, a control pressure line 26 is pressurized and the load holding valves 25a, 25b, which are pressure controlled, change their positions into open state. Further, the circuit 11 may comprise an anti-cavitation arrangement 27 for protecting the pumps P1, P2 against possible anti-cavitation situations. Thus, the anti-cavitation system has no effect for the control of the hydraulic actuator HA. The anti-cavitation system may comprise two passive check valves 28a, 28b and a pressure connection 29 to the reservoir 20. When cavitation appears, then the system allows directing supplementary hydraulic fluid flow through the line 29 to the pump before cavitation occurs. The circuit 11 may also comprise a shuttle valve 30 between the cavitation system 27 and the control pressure line 26 of the load holding valves 25a, 25b. However, all of the disclosed valves 25a, 25b, 28a, 28b and 30 are just passive valves requiring no active control, and further, operation of the valves have no influence to operational control of the hydraulic cylinder HC.

Figure 6 further discloses that the system may comprise a user interface UI, by means of which control commands and parameters may be input to the control unit CU. New software programs may as well be fed through the user interface UI to be executed in the control unit CU. The system may further comprise one or more electrical storages ES, such as a battery pack. Then recovered electrical energy of the motor M may be stored to the storage ES, or alternatively used for running other electrical devices.

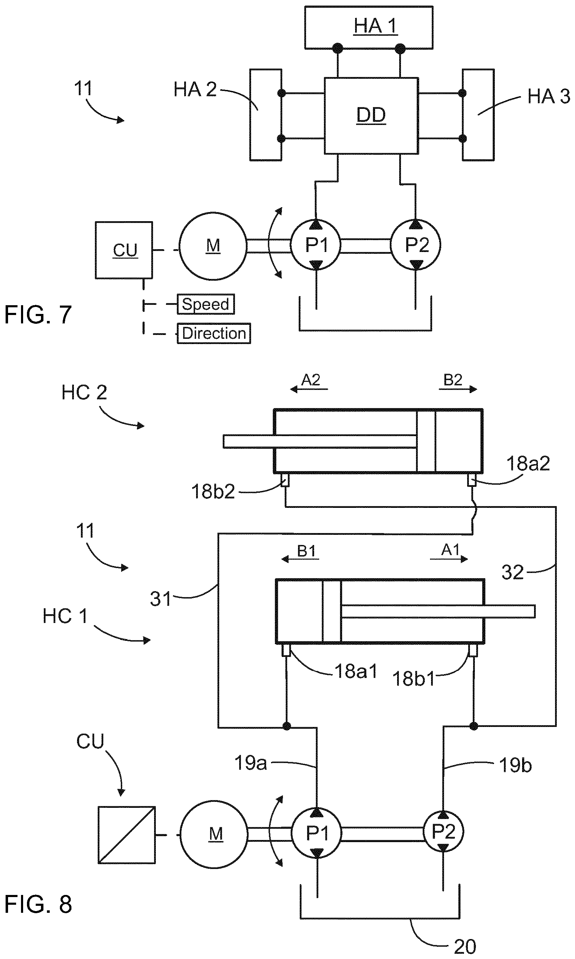

Figure 7 discloses a hydraulic circuit 11, which utilizes the above disclosed control principle, but is in this embodiment configured to actuate three hydraulic actuators HA1, HA2, HA3 at separate times. Then one of these actuators HA1 - HA3 may be selectively connected to the disclosed hydraulic system one at a time. The system comprises a distribution device DD for executing the selection. The distribution device DD may operate using simple ON/OFF principle.

Figure 8 discloses a hydraulic circuit 11 wherein two similar hydraulic cylinders HC1 and HC2 are controlled simultaneously by utilizing the disclosed one motor and two pumps control principle. Then the pressure ports 18a1 and 18a2 are connected to each other by means of a line 31, and correspondingly the ports 18b1 and 18b2 are connected by a line 32. Then the cylinders HC1, HC2, which may be hydraulic dump cylinders of a hauling truck, for example, operate simultaneously.

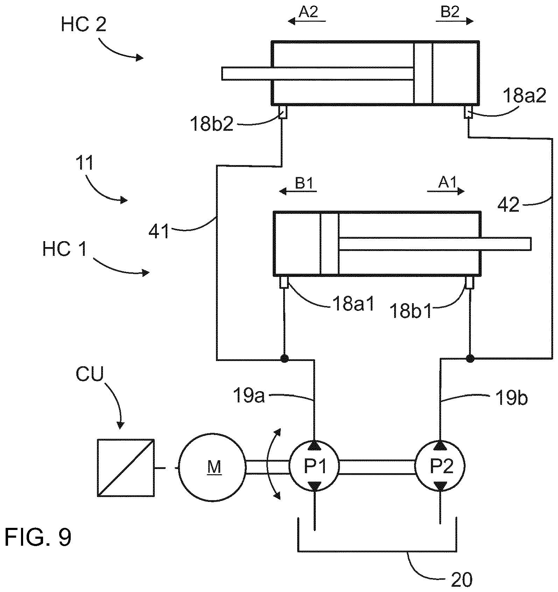

Figure 9 discloses a hydraulic circuit 11 wherein two similar hydraulic cylinders HC1 and HC2 are controlled simultaneously by utilizing the disclosed one motor and two pumps control principle. The solution differs from the one shown in the previous Figure 8 in that now a piston-side pressure space of the first hydraulic cylinder HC1 and a rod-side pressure space of the second hydraulic cylinder HC2 are in fluid connection to a common line 41, and correspondingly, a rod-side pressure space of the first hydraulic cylinder HC1 and a piston-side pressure space of the second hydraulic cylinder HC2 are in fluid connection to a common line 42. Further, the pumps P1 and P2 are equally sized. This kind of solution is suitable to be used in the frame steering implementations, for example. Then the cylinders HC1 and HC2 may be located on opposite sides of the steering joint and when the first cylinder HC1 extends, the second cylinder HC2 retracts, and vice versa. The steering requires same amount hydraulic fluid for both lines 41, 42, wherefore the pumps P1, P2 may be similar.

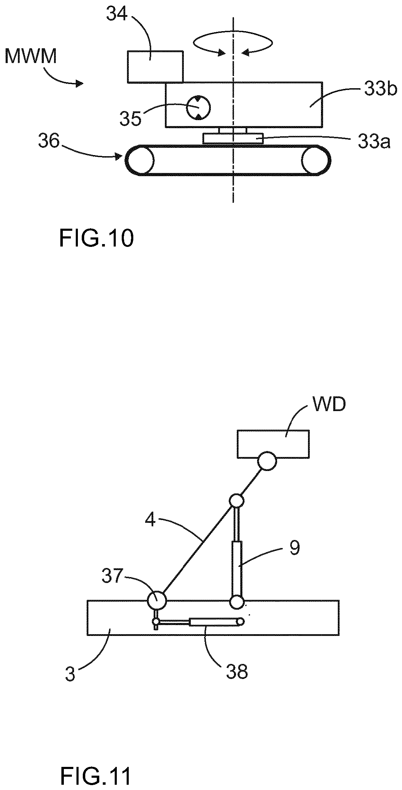

Figure 10 discloses a mobile work machine MWM in a simplified manner. The machine MWM may comprise a lower frame 33a and an upper frame 33b provided with a work device 34, such as a boom, bucket, mast or corresponding device. The upper frame 33b may be turned relative to the lower frame 33a by mans of a hydraulic rotation motor 35, which may be controlled by the disclosed control principle utilizing the speed and direction controlled electric motor. For simplicity reasons the hydraulic circuit is not disclosed. The lower frame 35a comprises moving members 36 such as crawler tracks or wheels. The upper frame 33b may be arranged to be turned a limited angle range or it may have rotatable operation.

Figure 11 discloses a simplified disclosure of a boom 4 movable relative to a joint 37 on a carrier 3 of a mobile machine. At a distal end of the boom 4 may be a working device WD such as a man cage, whereby the mobile machine may be a personal lifter, for example. The boom 4 may be lifted using a lifting cylinder 9 or two lifting cylinders operating in parallel. The lifting cylinder 9, or the doubled cylinders, may be driven by the disclosed one motor two pumps system. The movement of the boom 4 may be locked for security reasons by means of a locking cylinder 38, which may be located in connection with the joint 37 or it may be arranged to lock movements of the lifting cylinder 9 mechanically. The locking cylinder 38 or motor may be arranged to operate simultaneously together with the lifting cylinder 9, whereby no separate control valves and control commands are needed for controlling their operation.

The drawings and the related description are only intended to illustrate the idea of the invention. In its details, the invention may vary within the scope of the claims.

## Claims

1. A hydraulic system of a mobile work machine (MWM) ;
wherein the hydraulic system comprises:
at least one hydraulic pump (P1, P2)for generating hydraulic fluid flow and pressure to a hydraulic circuit (11) ;
at least one electric motor (M) for rotating the at least one hydraulic pump (P1, P2);
at least one hydraulic actuator (HA) connected to the hydraulic circuit (11); and
at least one control device (CU) for controlling operation of the hydraulic system; wherein,
the hydraulic system comprises two hydraulic pumps, a first hydraulic pump (P1) and a second hydraulic pump (P2);
the first hydraulic pump (P1) is connected to a first working pressure space (22a)of the hydraulic actuator (HA) by means of a first hydraulic line (19a);
the second hydraulic pump (P2) is connected to a second working pressure space (22b)of the hydraulic actuator (HA) by means of a second hydraulic line (19b), and wherein pressure of the hydraulic fluid prevailing in the first working pressure space (22a) and the second pressure space (22b) are configured to cause inversely directed forces for a moving element (23) of the hydraulic actuator (HA) ;
the hydraulic system comprises one common electric motor (M) which is configured to rotate the two hydraulic pumps (P1, P2) simultaneously;
the first and second hydraulic pumps (P1, P2) have inverse pumping characteristics so that when the first hydraulic pump (P1) generates pressure (P+) the second hydraulic pump (P2) generates suction (P-), and vice versa;
**characterized in that** the movement speed and direction of the hydraulic actuator (HA) are configured to be controlled by controlling rotational speed and direction of the electric motor (M).

2. The hydraulic system as claimed in claim 1, **characterized in that**
the hydraulic system comprises one single hydraulic actuator (HA), whereby the entire hydraulic system is dedicated to operate the single hydraulic actuator (HA).

3. The hydraulic system as claimed in claim 1 or 2, **characterized in that**
rotation speed and direction of the common electric motor (M) is controlled by means of a frequency converter whereby the hydraulic actuator (HA)is controlled indirectly by means of the frequency controlled electric motor (M).

4. The hydraulic system as claimed in any one of the preceding claims 1 - 3, **characterized in that**
movement speed and direction of the hydraulic actuator (HA) are configured to be proportional to rotation speed and direction of the common electric motor (M).

5. The hydraulic system as claimed in any one of the preceding claims 1 - 4, **characterized in that**
the first and second hydraulic pump (P1, P2) are connected to a same rotating axle (17) rotated by the common electric motor (M).

6. The hydraulic system as claimed in any one of the preceding claims 1 - 5, **characterized in that**
nominal size of the first working pressure space (22a) of the hydraulic actuator is greater than nominal size of the second working pressure space (22b); and
the first hydraulic pump (P1) has a first volume flow rate per revolution and the second hydraulic pump (P2) has a second volume flow rate per revolution which is minor than the first volume flow rate per revolution.

7. The hydraulic system as claimed in any one of the preceding claims 1 - 6, **characterized in that**
the hydraulic circuit (11) is an open circuit system, wherein feed ports (21a, 21b) of the first and second pump are connected to a reservoir (20).

8. The hydraulic system as claimed in any one of the preceding claims 1 - 7, **characterized in that**
the hydraulic system is provided with an energy recovery feature for converting kinetic energy into hydraulic energy, for converting the hydraulic energy into kinetic rotational energy, and further for converting the kinetic rotational energy into electric energy;
at least one of the mentioned hydraulic pumps (P1, P2)is configured to serve as a hydraulic motor when discharged hydraulic fluid flow is flowing through the pump to the reservoir (20), whereby rotation of the hydraulic pump (P1, P2) is generated;
the hydraulic pump (P1, P2) is configured to rotate the common electric motor (M) which is configured to serve as a generator when being de-energized; and
the rotation of the common electric motor (M) is configured to generate electric energy.

9. The hydraulic system as claimed in any one of the preceding claims 1 - 8, **characterized in that**
the first and second hydraulic lines (19a, 19b) are both without any actively controlled valves.

10. A mobile mining machine (2), comprising:
a movable carrier (3);
at least one mine work device (5, 13, 15) for executing mining work at an underground or surface mine work site;
a hydraulic system for moving the mine work device;
**characterized in that**
the hydraulic system is in accordance with the previous claims 1 - 9, wherein the movement speed and direction of the hydraulic actuator (HA) connected to the dedicated hydraulic system is controlled by means of the speed controlled electric motor (M).

11. The mining machine as claimed in claim 10, **characterized in that**
the mining machine (2) is a rock drilling rig (1) comprising at least one drilling boom (4) provided with a drilling unit (5);
the drilling boom (4) comprises at least one hydraulic boom cylinder (9) for moving the drilling boom (4); and
movement speed and direction of the mentioned boom cylinder (9) connected to the dedicated hydraulic system is configured to be controlled by means of the speed controlled electric motor (M).

12. The mining machine as claimed in claim 10 or 11, **characterized in that**
the mining machine (2) is a frame steered vehicle, such as a rock drilling rig (1), wheel loader (12) or hauling truck (14), comprising two frame parts (6a, 6b) and a steering joint (7) between the frame parts (6a, 6b);
the frame parts (6a, 6b) are turned during steering relative to each other by means of at least one hydraulic steering cylinder (8) connected to the dedicated hydraulic system; and
movement speed and direction of the at least one steering cylinder (8) is configured to be controlled by means of the speed controlled electric motor (M).

13. The mining machine as claimed in claim 10 or 12, **characterized in that**
the mining machine (2) is a wheel loader (12) comprising a bucket (13) which is connected to the carrier (3) by means of at least one lifting arm;
the lifting arm is movable relative to the carrier (3) by means of at least one hydraulic lifting cylinder (9) connected to the dedicated hydraulic system; and
movement speed and direction of the at least one lifting cylinder (9) is configured to be controlled by means of the speed controlled electric motor (M).

14. The mining machine as claimed in claim 10 or 12, **characterized in that**
the mining machine (2) is a hauling truck (14) comprising a dump box (15) for receiving rock material;
the dump box (15) is movable relative to the carrier (3) by means of at least one hydraulic dump cylinder (16) connected to the dedicated hydraulic system; and
movement speed and direction of the at least one dump cylinder (16) is configured to be controlled by means of the speed controlled electric motor (M).

15. A method of controlling a hydraulic actuator (HA); the method comprises:
generating hydraulic power to a hydraulic circuit (11) by means of at least one hydraulic pump (P1, P2) which is actuated by means of an electric motor (M); and
feeding and discharging hydraulic fluid from the hydraulic circuit (11) to a first and second working pressure space (22a, 22b) of the hydraulic actuator (HA) for controlling movement speed and direction of a movement element (23) of the hydraulic actuator (HA);
wherein the method comprises influencing hydraulic power prevailing in the first working pressure space (22a) of the actuator by means of a dedicated first hydraulic pump (P1);
influencing hydraulic power prevailing in the second working pressure space (22b) by means of a dedicated second hydraulic pump (P2);
rotating the first and second hydraulic pump (P1, P2) by means of one common speed controlled electric motor (M); and
**characterized in that** the method comprises controlling the movement speed and direction of the movement element (23) of the hydraulic actuator (HA) by controlling rotation of the common electric motor (M).

## Patentansprüche

1. Hydrauliksystem einer mobilen Arbeitsmaschine (MWM);
wobei das Hydrauliksystem umfasst:
mindestens eine Hydraulikpumpe (P1, P2) zum Erzeugen von Hydraulikflüssigkeitsstrom und -druck zu einem Hydraulikkreislauf (11);
mindestens einen Elektromotor (M) zum Drehen der mindestens einen Hydraulikpumpe (P1, P2);
mindestens ein Hydraulikstellantrieb (HA), der mit dem Hydraulikkreislauf (11) verbunden ist; und
mindestens eine Steuervorrichtung (CU) zum Steuern eines Betriebs des Hydrauliksystems;
wobei
das Hydrauliksystem zwei Hydraulikpumpen, eine erste Hydraulikpumpe (P1) und eine zweite Hydraulikpumpe (P2), umfasst;
die erste Hydraulikpumpe (P1) mit einem ersten Arbeitsdruckraum (22a) des Hydraulikstellantriebs (HA) mittels einer ersten Hydraulikleitung (19a) verbunden ist;
die zweite Hydraulikpumpe (P2) mit einem zweiten Arbeitsdruckraum (22b) des Hydraulikstellantriebs (HA) mittels einer zweiten Hydraulikleitung (19b) verbunden ist, und wobei der in dem ersten Arbeitsdruckraum (22a) und dem zweiten Druckraum (22b) herrschende Druck der Hydraulikflüssigkeit konfiguriert ist, um umgekehrt gerichtete Kräfte für ein bewegliches Element (23) des Hydraulikstellantriebs (HA) zu bewirken;
das Hydrauliksystem einen gemeinsamen Elektromotor (M) umfasst, der konfiguriert ist, um die beiden Hydraulikpumpen (P1, P2) gleichzeitig zu drehen;
die erste und die zweite Hydraulikpumpe (P1, P2) inverse Pumpeigenschaften aufweisen, so dass, wenn die erste Hydraulikpumpe (P1) einen Druck (P+) erzeugt, die zweite Hydraulikpumpe (P2) einen Sog (P-) erzeugt und umgekehrt;
**dadurch gekennzeichnet, dass** die Bewegungsgeschwindigkeit und -richtung des Hydraulikstellantriebs (HA) konfiguriert sind, um durch Steuern der Drehgeschwindigkeit und -richtung des Elektromotors (M) gesteuert zu werden.

2. Hydrauliksystem nach Anspruch 1, **dadurch gekennzeichnet, dass**
das Hydrauliksystem einen einzigen Hydraulikstellantrieb (HA) umfasst, wobei das gesamte Hydrauliksystem zum Betrieb des einzigen Hydraulikstellantriebs (HA) dezidiert ist.

3. Hydrauliksystem nach Anspruch 1 oder 2, **dadurch gekennzeichnet, dass**
Drehgeschwindigkeit und -richtung des gemeinsamen Elektromotors (M) mittels eines Frequenzumrichters gesteuert wird, wobei der Hydraulikstellantrieb (HA) indirekt mittels des frequenzgesteuerten Elektromotors (M) gesteuert wird.

4. Hydrauliksystem nach einem der vorstehenden Ansprüche 1 - 3, **dadurch gekennzeichnet, dass**
Bewegungsgeschwindigkeit und -richtung des Hydraulikstellantriebs (HA) konfiguriert sind, um proportional zu der Drehgeschwindigkeit und -richtung des gemeinsamen Elektromotors (M) zu sein.

5. Hydrauliksystem nach einem der vorstehenden Ansprüche 1 - 4, **dadurch gekennzeichnet, dass**
die erste und zweite Hydraulikpumpe (P1, P2) mit einer gleichen Drehachse (17) verbunden sind, die durch den gemeinsamen Elektromotor (M) gedreht wird.

6. Hydrauliksystem nach einem der vorstehenden Ansprüche 1 - 5, **dadurch gekennzeichnet, dass**
Nenngröße des ersten Arbeitsdruckraums (22a) des Hydraulikstellantriebs größer als Nenngröße des zweiten Arbeitsdruckraums (22b) ist; und
die erste Hydraulikpumpe (P1) eine erste Volumenstromrate pro Umdrehung aufweist und die zweite Hydraulikpumpe (P2) eine zweite Volumenstromrate pro Umdrehung aufweist, die kleiner ist als die erste Volumenstromrate pro Umdrehung.

7. Hydrauliksystem nach einem der vorstehenden Ansprüche 1 - 6, **dadurch gekennzeichnet, dass**
der Hydraulikkreislauf (11) ein System mit offenem Kreislauf ist, wobei Zufuhröffnungen (21a, 21b) der ersten und zweiten Pumpe mit einem Reservoir (20) verbunden sind.

8. Hydrauliksystem nach einem der vorstehenden Ansprüche 1 - 7, **dadurch gekennzeichnet, dass**
das Hydrauliksystem mit einer Energierückgewinnungsfunktion zum Umwandeln von kinetischer Energie in hydraulische Energie, zum Umwandeln der hydraulischen Energie in kinetische Drehungsenergie und weiter zum Umwandeln der kinetischen Drehungsenergie in elektrische Energie bereitgestellt ist;
mindestens eine der genannten Hydraulikpumpen (P1, P2) konfiguriert ist, um als Hydraulikmotor zu dienen, wenn ein ausgestoßener Hydraulikflüssigkeitsstrom durch die Pumpe zu dem Reservoir (20) strömt, wodurch eine Drehung der Hydraulikpumpe (P1, P2) erzeugt wird;
die Hydraulikpumpe (P1, P2) konfiguriert ist, um den gemeinsamen Elektromotor (M) zu drehen, der konfiguriert ist, um als Generator zu dienen, wenn er stromlos geschaltet ist; und
die Drehung des gemeinsamen Elektromotors (M) konfiguriert ist, um elektrische Energie zu erzeugen.

9. Hydrauliksystem nach einem der vorstehenden Ansprüche 1 - 8, **dadurch gekennzeichnet, dass**
die erste und zweite Hydraulikleitung (19a, 19b) beide ohne aktiv gesteuerte Ventile sind.

10. Mobile Bergbaumaschine (2), umfassend:
einen beweglichen Träger (3);
mindestens eine Bergwerks-Arbeitsvorrichtung (5, 13, 15) zur Ausführung von Bergbauarbeiten an einer unter- oder übertägigen Bergwerksbaustelle;
Hydrauliksystem zum Bewegen der Bergwerks-Arbeitsvorrichtung;
**dadurch gekennzeichnet, dass**
das Hydrauliksystem den vorstehenden Ansprüchen 1 - 9 entspricht, wobei die Bewegungsgeschwindigkeit und -richtung des Hydraulikstellantriebs (HA), der mit dem dedizierten Hydrauliksystem verbunden ist, mittels des geschwindigkeitsgesteuerten Elektromotors (M) gesteuert wird.

11. Bergbaumaschine nach Anspruch 10, **dadurch gekennzeichnet, dass**
die Bergbaumaschine (2) eine Gesteinsbohranlage (1) ist, die mindestens einen mit einer Bohreinheit (5) bereitgestellten Bohrausleger (4) umfasst;
der Bohrausleger (4) mindestens einen hydraulischen Auslegerzylinder (9) zum Bewegen des Bohrauslegers (4) umfasst; und
die Bewegungsgeschwindigkeit und -richtung des genannten Auslegerzylinders (9), der mit dem dedizierten Hydrauliksystem verbunden ist, konfiguriert ist, um mittels des geschwindigkeitsgesteuerten Elektromotors (M) gesteuert zu werden.

12. Bergbaumaschine nach Anspruch 10 oder 11, **dadurch gekennzeichnet, dass**
die Bergbaumaschine (2) ein rahmengelenktes Fahrzeug wie z.B. eine Gesteinsbohranlage (1), ein Radlader (12) oder ein Muldenkipper (14) ist, das zwei Rahmenteile (6a, 6b) und ein Lenkungsgelenk (7) zwischen den Rahmenteilen (6a, 6b) umfasst;
die Rahmenteile (6a, 6b) beim Lenken relativ zueinander mittels mindestens eines hydraulischen Lenkzylinders (8) gedreht werden, der mit dem dezidierten Hydrauliksystem verbunden ist; und
die Bewegungsgeschwindigkeit und -richtung des mindestens einen Lenkzylinders (8) konfiguriert ist, um mittels des geschwindigkeitsgesteuerten Elektromotors (M) gesteuert zu werden.

13. Bergbaumaschine nach Anspruch 10 oder 12, **dadurch gekennzeichnet, dass**
die Bergbaumaschine (2) ein Radlader (12) ist, der eine Schaufel (13) umfasst, die mittels mindestens eines Hubarms mit dem Träger (3) verbunden ist;
der Hubarm relativ zu dem Träger (3) mittels mindestens eines hydraulischen Hubzylinders (9) beweglich ist, der mit dem dedizierten Hydrauliksystem verbunden ist; und
Bewegungsgeschwindigkeit und -richtung des mindestens einen Lenkzylinders (9) konfiguriert ist, um mittels des geschwindigkeitsgesteuerten Elektromotors (M) gesteuert zu werden.

14. Bergbaumaschine nach Anspruch 10 oder 12, **dadurch gekennzeichnet, dass**
die Bergbaumaschine (2) ein Muldenkipper (14) ist, der einen Kippkasten (15) zur Aufnahme von Gesteinsmaterial umfasst;
der Kippkasten (15) relativ zu dem Träger (3) mittels mindestens eines hydraulischen Kippzylinders (16) beweglich ist, der mit dem dedizierten Hydrauliksystem verbunden ist; und
Bewegungsgeschwindigkeit und -richtung des mindestens einen Kippzylinders (16) konfiguriert ist, um mittels des geschwindigkeitsgesteuerten Elektromotors (M) gesteuert zu werden.

15. Verfahren zum Steuern eines Hydraulikstellantriebs (HA); wobei das Verfahren umfasst:
Erzeugen von Hydraulikleistung für einen Hydraulikkreislauf (11) mittels mindestens einer Hydraulikpumpe (P1, P2), die mittels eines Elektromotors (M) angetrieben wird; und
Zuführen und Abführen von Hydraulikflüssigkeit aus dem Hydraulikkreislauf (11) zu einem ersten und zweiten Arbeitsdruckraum (22a, 22b) des Hydraulikstellantriebs (HA) zum Steuern der Bewegungsgeschwindigkeit und -richtung eines Bewegungselements (23) des Hydraulikstellantriebs (HA);
wobei das Verfahren umfasst
Beeinflussen der im ersten Arbeitsdruckraum (22a) des Stellantriebs herrschenden Hydraulikleistung mittels einer dedizierten ersten Hydraulikpumpe (P1);
Beeinflussen der im zweiten Arbeitsdruckraum (22b) herrschenden Hydraulikleistung mittels einer dezidierten zweiten Hydraulikpumpe (P2);
Drehen der ersten und zweiten Hydraulikpumpe (P1, P2) mittels eines gemeinsamen geschwindigkeitsgesteuerten Elektromotors (M); und
**dadurch gekennzeichnet, dass** das Verfahren Steuern der Bewegungsgeschwindigkeit und -richtung des Bewegungselements (23) des Hydraulikstellantriebs (HA) durch Steuern der Drehung des gemeinsamen Elektromotors (M) umfasst.

## Revendications

1. Système hydraulique d'un engin de chantier mobile (MWM) ;
dans lequel le système hydraulique comprend :
au moins une pompe hydraulique (P1, P2) pour générer un écoulement et une pression de fluide hydraulique vers un circuit hydraulique (11) ;
au moins un moteur électrique (M) pour faire tourner la au moins une pompe hydraulique (P1, P2) ;
au moins un actionneur hydraulique (HA) relié au circuit hydraulique (11) ; et
au moins un dispositif de commande (CU) pour commander un fonctionnement du système hydraulique ;
dans lequel,
le système hydraulique comprend deux pompes hydrauliques, une première pompe hydraulique (P1) et une seconde pompe hydraulique (P2) ;
la première pompe hydraulique (P1) est reliée à un premier espace de pression de travail (22a) de l'actionneur hydraulique (HA) au moyen d'une première ligne hydraulique (19a) ;
la seconde pompe hydraulique (P2) est reliée à un second espace de pression de travail (22b) de l'actionneur hydraulique (HA) au moyen d'une seconde ligne hydraulique (19b), et dans lequel une pression du fluide hydraulique régnant dans le premier espace de pression de travail (22a) et le second espace de pression (22b) sont configurées pour provoquer des forces de direction inverse pour un élément mobile (23) de l'actionneur hydraulique (HA) ;
le système hydraulique comprend un moteur électrique commun (M) qui est configuré pour faire tourner les deux pompes hydrauliques (P1, P2) simultanément ;
les première et seconde pompes hydrauliques (P1, P2) ont des caractéristiques de pompage inverses de telle sorte que lorsque la première pompe hydraulique (P1) génère une pression (P+), la seconde pompe hydraulique (P2) génère une aspiration (P-), et vice versa ;
**caractérisé en ce que** la vitesse et la direction de déplacement de l'actionneur hydraulique (HA) sont configurées pour être commandées en commandant une vitesse une direction de rotation du moteur électrique (M).

2. Système hydraulique selon la revendication 1, **caractérisé en ce que**
le système hydraulique comprend un actionneur hydraulique unique (HA), de telle sorte que système hydraulique entier est dédié pour faire fonctionner l'actionneur hydraulique unique (HA).

3. Système hydraulique selon la revendication 1 ou 2, **caractérisé en ce que**
la vitesse et la direction de rotation du moteur électrique commun (M) sont commandées au moyen d'un convertisseur de fréquence, de telle sorte que l'actionneur hydraulique (HA) est commandé indirectement au moyen du moteur électrique commandé en fréquence (M).

4. Système hydraulique selon l'une quelconque des revendications 1 à 3 précédentes, **caractérisé en ce que**
la vitesse et la direction de déplacement de l'actionneur hydraulique (HA) sont configurées pour être proportionnelles à la vitesse et à la direction de rotation du moteur électrique commun (M).

5. Système hydraulique selon l'une quelconque des revendications 1 à 4 précédentes, **caractérisé en ce que**
les première et seconde pompes hydrauliques (P1, P2) sont reliées à un même axe rotatif (17) entraîné en rotation par le moteur électrique commun (M).

6. Système hydraulique selon l'une quelconque des revendications 1 à 5 précédentes, **caractérisé en ce que**
une dimension nominale du premier espace de pression de travail (22a) de l'actionneur hydraulique est supérieure à la dimension nominale du second espace de pression de travail (22b) ; et
la première pompe hydraulique (P1) a un premier débit d'écoulement volumique par tour et la seconde pompe hydraulique (P2) a un second débit d'écoulement volumique par tour qui est inférieur au premier débit d'écoulement volumique par tour.

7. Système hydraulique selon l'une quelconque des revendications 1 à 6 précédentes, **caractérisé en ce que**
le circuit hydraulique (11) est un système de circuit ouvert, dans lequel des orifices d'alimentation (21a, 21b) des première et seconde pompes sont reliés à un réservoir (20).

8. Système hydraulique selon l'une quelconque des revendications 1 à 7 précédentes, **caractérisé en ce que**
le système hydraulique est pourvu d'une fonction de récupération d'énergie pour convertir de l'énergie cinétique en énergie hydraulique, pour convertir l'énergie hydraulique en énergie de rotation cinétique, et en outre pour convertir l'énergie de rotation cinétique en énergie électrique ;
au moins une des pompes hydrauliques mentionnées (P1, P2) est configurée pour servir de moteur hydraulique lorsqu'un écoulement de fluide hydraulique évacué s'écoule à travers la pompe vers le réservoir (20), de telle sorte qu'une rotation de la pompe hydraulique (P1, P2) est générée ;
la pompe hydraulique (P1, P2) est configurée pour faire tourner le moteur électrique commun (M) qui est configuré pour servir de générateur lors d'une mise hors tension ; et
la rotation du moteur électrique commun (M) est configurée pour générer de l'énergie électrique.

9. Système hydraulique selon l'une quelconque des revendications 1 à 8 précédentes, **caractérisé en ce que**
les première et seconde lignes hydrauliques (19a, 19b) sont toutes deux dépourvues de soupapes à commande active.

10. Engin minier mobile (2), comprenant :
un support mobile (3) ;
au moins un dispositif de travail minier (5, 13, 15) pour exécuter un travail minier sur un site de travail minier souterrain ou en surface ;
un système hydraulique pour déplacer le dispositif de travail minier ;
**caractérisé en ce que**
le système hydraulique est selon les revendications 1 à 9 précédentes, dans lequel la vitesse et la direction de déplacement de l'actionneur hydraulique (HA) relié au système hydraulique dédié sont commandées au moyen du moteur électrique à vitesse commandée (M).

11. Engin minier selon la revendication 10, **caractérisé en ce que**
l'engin minier (2) est une plate-forme de forage de roche (1) comprenant au moins une flèche de forage (4) pourvue d'une unité de forage (5) ;
la flèche de forage (4) comprend au moins un vérin de flèche hydraulique (9) pour déplacer la flèche de forage (4) ; et
la vitesse et la direction de déplacement du vérin de flèche mentionné (9) relié au système hydraulique dédié sont configurées pour être commandées au moyen du moteur électrique à vitesse commandée (M).

12. Engin minier selon la revendication 10 ou 11, **caractérisé en ce que**
l'engin minier (2) est un véhicule à châssis articulé, tel qu'une plate-forme de forage de roche (1), une chargeuse sur pneus (12) ou un camion de transport (14), comprenant deux parties de châssis (6a, 6b) et un joint de direction (7) entre les parties de châssis (6a, 6b) ;
les parties de châssis (6a, 6b) sont tournées pendant un changement de direction l'une par rapport à l'autre au moyen d'au moins un vérin de direction hydraulique (8) relié au système hydraulique dédié ; et
la vitesse et la direction de déplacement du au moins un vérin de direction (8) sont configurées pour être commandées au moyen du moteur électrique à vitesse commandée (M).

13. Engin minier selon la revendication 10 ou 12, **caractérisée en ce que**
l'engin minier (2) est une chargeuse sur roues (12) comprenant un godet (13) qui est relié au support (3) au moyen d'au moins un bras de levage ;
le bras de levage est mobile par rapport au support (3) au moyen d'au moins un vérin de levage hydraulique (9) relié au système hydraulique dédié ; et
la vitesse et la direction de déplacement du au moins un vérin de levage (9) sont configurées pour être commandées au moyen du moteur électrique à vitesse commandée (M).

14. Engin minier selon la revendication 10 ou 12, **caractérisé en ce que**
l'engin minier (2) est un camion de transport (14) comprenant une benne basculante (15) pour recevoir du matériau rocheux ;
la benne basculante (15) est mobile par rapport au support (3) au moyen d'au moins un vérin de décharge hydraulique (16) relié au système hydraulique dédié ; et
la vitesse et la direction de déplacement du au moins un vérin de décharge (16) sont configurées pour être commandées au moyen du moteur électrique à vitesse commandée (M).

15. Procédé de commande d'un actionneur hydraulique (HA) ; le procédé comprenant les étapes consistant à :
générer de la puissance hydraulique vers un circuit hydraulique (11) au moyen d'au moins une pompe hydraulique (P1, P2) qui est actionnée au moyen d'un moteur électrique (M) ; et
alimenter et évacuer du fluide hydraulique à partir du circuit hydraulique (11) vers un premier et un second espace de pression de travail (22a, 22b) de l'actionneur hydraulique (HA) afin de commander la vitesse et la direction de déplacement d'un élément de déplacement (23) de l'hydraulique actionneur (HA) ;
dans lequel le procédé comprend les étapes consistant à
influencer une puissance hydraulique régnant dans le premier espace de pression de travail (22a) de l'actionneur au moyen d'une première pompe hydraulique dédiée (P1) ;
influencer une puissance hydraulique régnant dans le second espace de pression de travail (22b) au moyen d'une seconde pompe hydraulique dédiée (P2) ;
faire tourner les première et seconde pompes hydrauliques (P1, P2) au moyen d'un moteur électrique à vitesse commandée commun (M) ; et
**caractérisé en ce que** le procédé comprend une commande de la vitesse et de la direction de déplacement de l'élément de déplacement (23) de l'actionneur hydraulique (HA) en commandant une rotation du moteur électrique commun (M).
